# EUROPEAN PATENT APPLICATION

(11) **EP 3 121 917 A1**
(43) Date of publication of application: **25.01.2017**
(21) Application number: 15177636.6
(22) Date of filing: 21.07.2015
(51) Int. Cl.: H02G 1/10, E02F 5/10

(54) **CABLE PLOUGH**

(71) Applicant: Soil Machine Dynamics Limited, Tyne and Wear NE28 6UZ (GB)
(72) Inventor: The designation of the inventor has not yet been filed
(74) Representative: Vinsome, Rex Martin

(57) **Abstract**

A plough (2) for burying a cable (4) in a trench in the sea bed (6) is disclosed. The plough comprises a plough share (10) for forming a trench in the sea bed for receiving the cable, and skids (12, 14) for engaging the sea bed and for supporting the plough share. A cable support (20) is moveable between a first position (28), in which the cable support supports part of the cable above the plough share during formation of the trench, by allowing said part of the cable to rest on the cable support, and a second position, in which said part of the cable can be loaded onto the cable support. The second position is lower than the first position.

## Description

The present invention relates to a plough for placing an elongate object into a floor of a body of water, and relates particularly, but not exclusively, to a plough for placing a cable into a trench in the seabed.

It is known to bury cables in the sea bed by means of cable ploughs, which form a trench in the sea bed by means of a plough share and support a cable above the share which is subsequently placed into the trench. In order to load a cable into the cable plough, the plough is lowered onto the cable, which initially lies on the sea bed, from a surface vessel so that the plough is located around the cable. The cable then needs to be moved to a position above the plough share. This is achieved by means of a pair of grab devices provided on the plough, which lift the cable at locations forwards and rearwards of the share. However, such known ploughs suffer from the disadvantage that a high concentration of forces arises around the grab devices lifting the cable, the concentration increasing as the cable is lifted since more weight of the cable comes out of contact with the sea bed and therefore needs to be supported by the grab devices. This therefore involves a risk of damage to the cable. In addition, it is often necessary to apply lateral forces to the cable so that it can be manoeuvred from a position on the sea bed adjacent to the share to a position above the share. Such lateral forces are difficult to control and also risk damage to the cable, as well as increasing the cost and complexity of equipment necessary for loading the cable into the plough.

Preferred embodiments of the present invention seek to overcome one or more of the above disadvantages of the prior art.

According to the present invention, there is provided a plough for placing an elongate object into a floor of a body of water, the plough comprising:-
trench forming means for forming a trench in the floor of the body of water for receiving the elongate object;
first support means for engaging the floor of the body of water and for supporting the trench forming means; and
second support means moveable between at least one first position, in which the second support means supports part of the elongate object above the trench forming means during formation of said trench, by allowing said part of said elongate object to rest on said second support means, and at least one second position, in which said part of said elongate object can be loaded onto the second support means, and at least one said second position is lower than the or each said first position.

By providing second support means moveable between at least one first position, in which the second support means supports part of the elongate object above the trench forming means during formation of said trench, by allowing said part of said elongate object to rest on said second support means, and at least one second position, in which said part of said elongate object can be loaded onto the second support means, and at least one said second position is lower than the or each said first position, this enables the elongate object to be supported over a larger area, and possibly over a larger minimum bend radius, than in the case of known ploughs. This in turn provides the advantage of reducing the concentration of forces applied to the elongate object while the elongate object is lifted to its first position, thereby reducing the risk of damage to the elongate object.

The second support means may be adapted to prevent bending of the elongate object around a bend radius smaller than a first pre-determined minimum bend radius.

This provides the advantage of further reducing risk of damage to the elongate object.

The second support means may comprise a plurality of rollers.

The plough may further comprise lifting means for lifting said part of said elongate object out of contact with said floor, wherein said second support means is moveable between at least one third position, in which said second support means does not engage said part of said elongate object when said part is located in contact with said floor, and at least one said second position.

This provides the advantage of enabling the second support means to be located below the elongate object without applying lateral forces to the elongate object. This is turn provides the advantage of further reducing the risk of damage to the elongate object and reducing the complexity of the apparatus necessary for handling the elongate object.

The lifting means may comprise a plurality of grab devices.

The second support means may be pivotable between at least one said third position and at least one said second position.

The trench forming means may be moveable between at least one fourth position, in which said trench forming means is adapted to form a trench in said floor, and at least one fifth position, in which said trench forming means does not obstruct movement of said second support means between at least one said first position and at least one said second position.

This provides the further advantage of enabling the plough to be located directly above the elongate object located on the floor of the body of water, thereby avoiding the need to apply lateral forces on the elongate object to load it into the plough. The advantage is also provided, compared with ploughs in which the share is fixed in position, of providing a wider space between the first support means for locating the plough on the elongate object as the plough is manoeuvred into position, thereby reducing the risk of damage to the elongate object.

The trench forming means may be pivotable between at least one said fourth position and at least one said fifth position.

The first support means may include a plurality of ground engaging members.

The first support means may comprise a first plurality of ground engaging members arranged forwards of said trench forming means, and a second plurality of ground engaging members arranged rearwards of said trench forming means.

This provides the advantage of improving the stability of the plough while the trench forming means is in a said fifth position.

A plurality of said ground engaging members may comprise skids.

The plough may further comprise actuator means for adjusting the height of said trench forming means relative to said floor.

The plough may further comprise urging means for urging said elongate object into said trench.

This provides the advantage of ensuring that the elongate object is located in the trench before the walls of the trench collapse.

The urging means may be adapted to prevent bending of said elongate object around a bend radius smaller than a second predetermined minimum bend radius.

The urging means may comprise a plurality of rollers.

A preferred embodiment of the invention will now be described, by way of example only and not in any limitative sense, with reference to the accompanying drawings, in which:-
Figures 1A to 1J show side views of a cable plough embodying the present invention during a sequence of steps of loading a cable into the plough;
Figure 2 is an end view of the plough of Figure 1A;
Figure 3 is an end view of the plough of Figure 1D;
Figure 4 is an end view of the plough of Figure 1E;
Figure 5 is an end view of the plough of Figure 1F;
Figure 6 is an end view of the plough of Figure 1G;
Figure 7 is an end view of the plough of Figure 1H;
Figure 8 is an end view of the plough of Figure 1I; and
Figure 9 is an end view of the plough of Figure 1J.

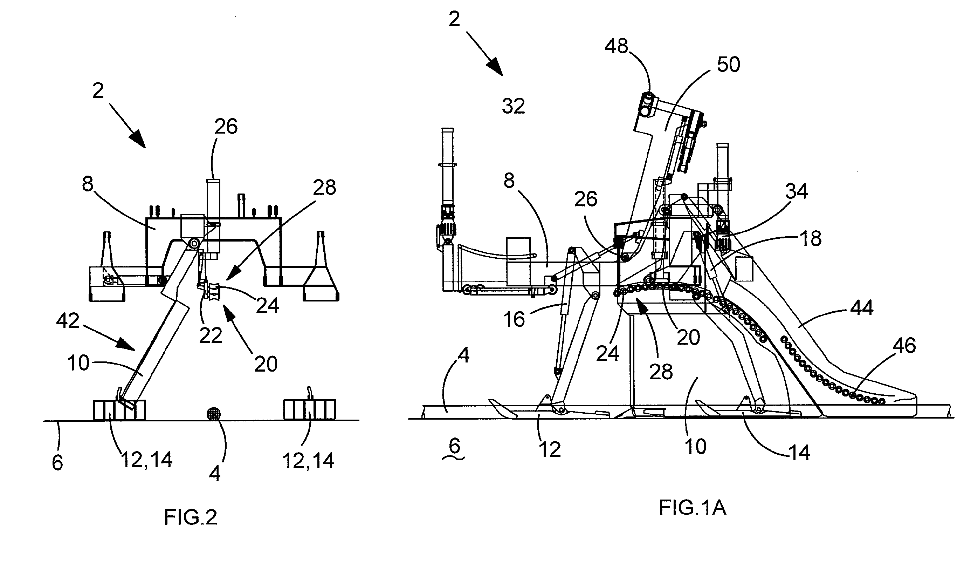

Referring to Figures 1A and 2, a cable plough 2 embodying the present invention for burying a cable 4 in a trench in the sea bed 6 has a body 8 supporting trench forming means in the form of a plough share 10 and first support means in the form of a first pair of front skids 12 and a second pair of rear skids 14 for supporting the body 8. The skids 12, 14 are connected to the body 8 by means of actuator means in the form of respective hydraulic actuators 16, 18 for adjusting the height of the share 10 relative to the body 8, thereby enabling adjustment of the height of the share 10 relative to the sea bed 6.

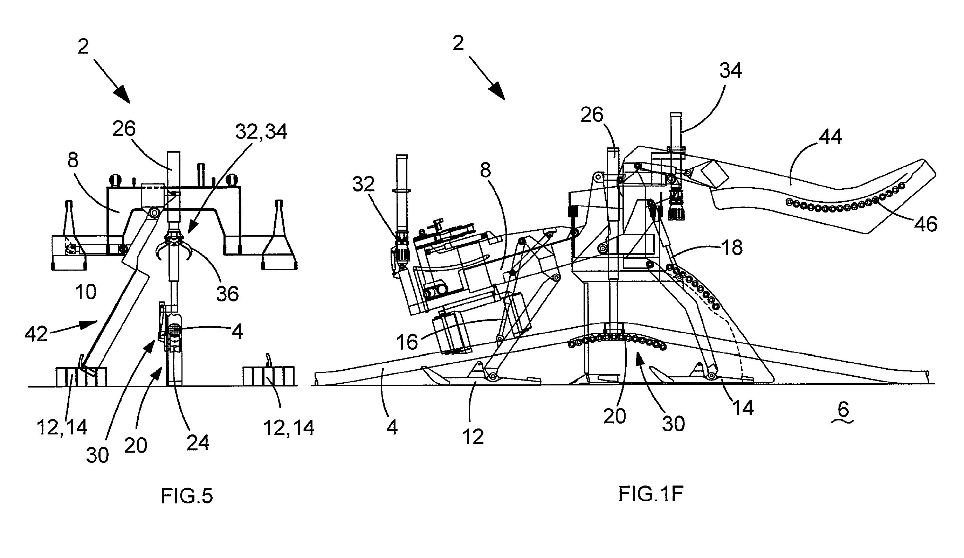

Second support means in the form of a cable support 20 has a frame 22 supporting a row of rollers 24 in a generally part-circular path, and is mounted to the body 8 for supporting the cable 4 on an upper surface thereof and for preventing bending of the cable 4 around a bend radius smaller than a first minimum bend radius. The cable support 20 is moveable by means of a hydraulic actuator 26 between a first position 28 (Figure 1A), in which the cable 4 is supported above the plough share 10, and a second position 30 (Figure 1F) is which the cable 4 is supported at a position adjacent the sea bed 6, the second position 30 being lower than the first position 28.

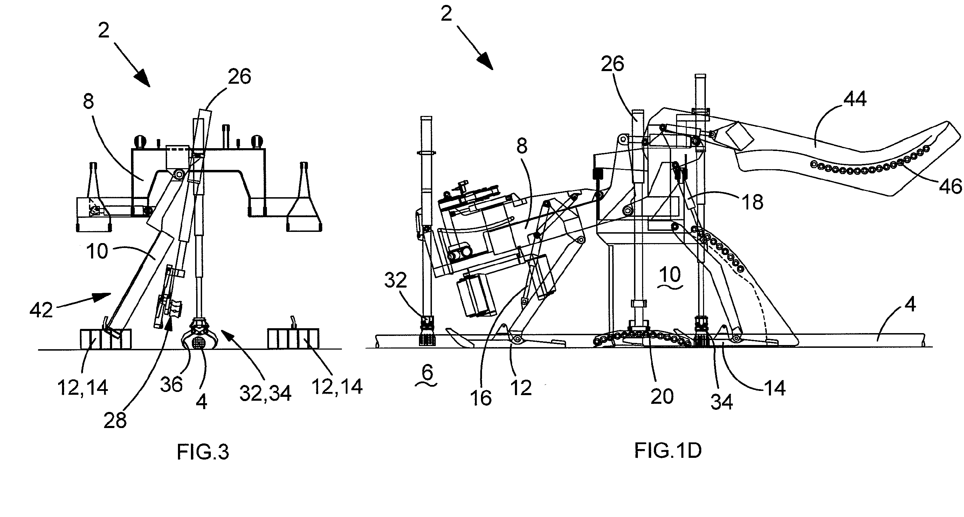

Lifting means in the form of forward 32 and rearward 34 grab devices having jaws 36 (Figure 3) is located respectively forwards and rearwards of the cable support 20. The grab devices 32, 34 are adapted to be lowered to grip the cable 4 forwardly and rearwardly of the cable support 20 to lift the cable 4 out of contact with the sea bed 6 to enable the cable support 20 to be located under the cable 4 in the second position 30 of the cable support 20. The cable support 20 can be pivoted, by means of one or more hydraulic actuators (not shown) between the second position 30 shown in Figure 1F and one or more third positions 38 (Figure 3) in which the cable support 20 does not engage the cable 4 when the cable 4 rests on the sea bed 6 so that movement of the cable 4 out of contact with the sea bed 6 is not obstructed.

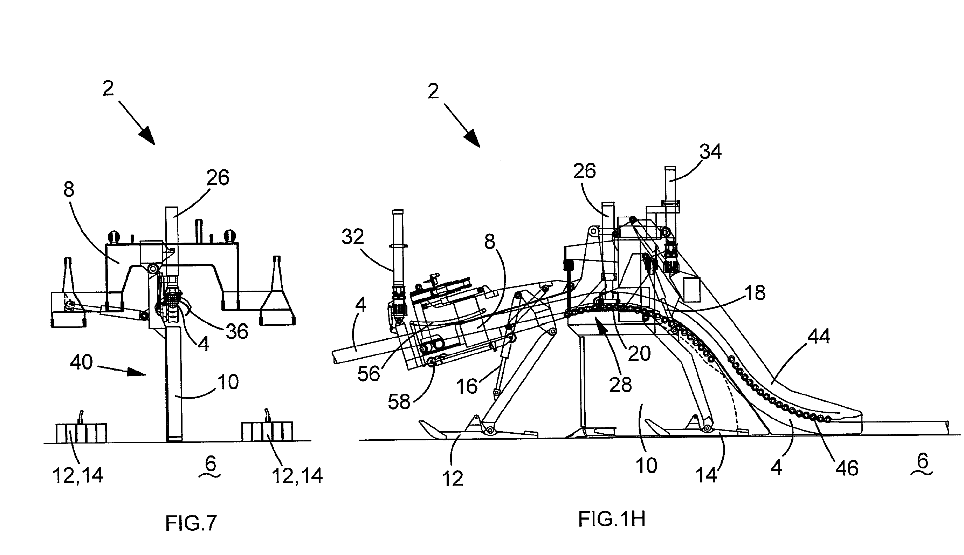

The plough share 10 is pivotable between a fourth position 40 (Figure 7) in which it cuts a trench in the sea bed 6, and a fifth position 42 (Figure 2) in which the plough share 10 does not obstruct movement of the cable support 20 between the first 28 and second 30 positions.

Urging means in the form of a depressor 44 having rollers 46 arranged in a part-circular path urges the cable 4 into the trench before the walls of the trench can collapse, and prevents bending of the cable 4 around a bend radius smaller than a second minimum bend radius, which may be the same as or different from the first minimum bend radius.

The operation of the plough 2 shown in the Figures will now be described.

In order to load the cable 4 into the plough 2 before the plough 2 forms a trench in the sea bed 6, the plough share 10 is initially in the fifth position 42 and the cable support 20 is in the first position 28, as shown in Figures 1A and 2. The plough 2 is suspended from a surface vessel by means of a tow rope (not shown) attached to attachment point 48 on drawbar 50. The plough 2 is landed over the cable 4, and the share 10 being in the fifth position 42 leaves the full lateral gap between the skids 12, 14 available to locate over the cable 4, thereby reducing the risk of damage to the cable 4 as the plough 2 is lowered on to the cable 4 from a surface vessel. Thrusters (not shown) on the plough 2 help manoeuvre the plough 2 into position over the cable 4, and the position of the cable 4 is monitored by means of camera and sonar.

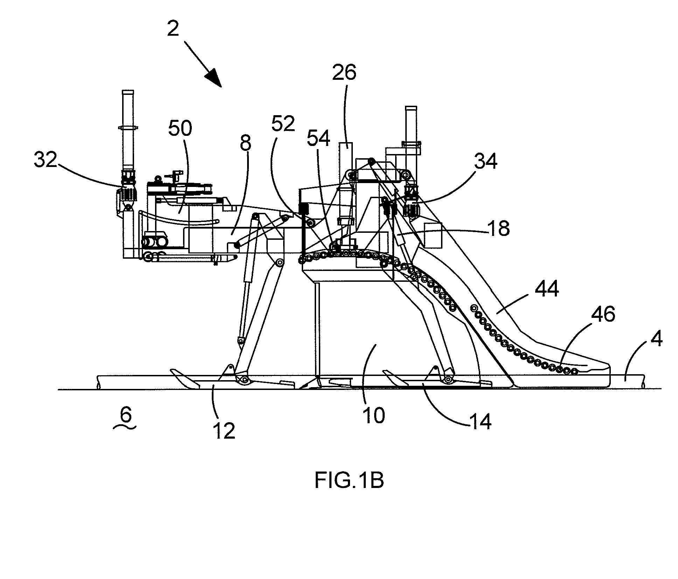

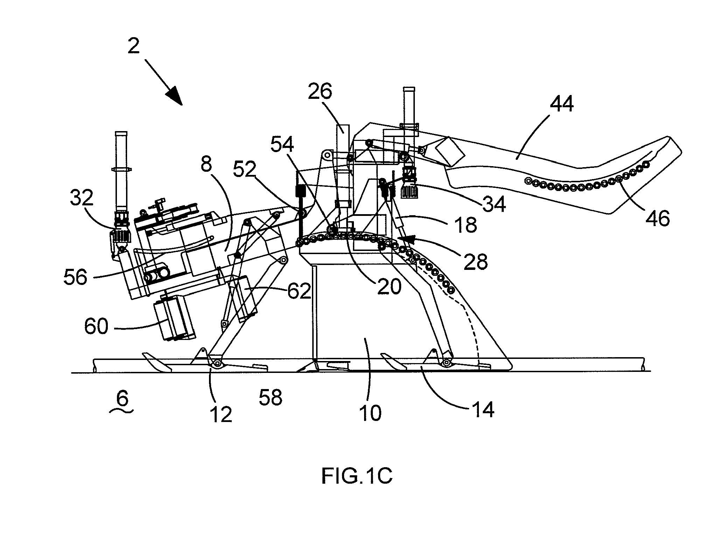

When the operator is satisfied that the position and orientation of the plough 2 relative to the cable 4 are correct, the drawbar 50 is lowered about pivot 52 relative to the body 8, as shown in Figure 1B, and the surface vessel is positioned ahead of the plough 2. The body 8 of the plough 2 is then pivoted downwards about pivot 54 to bring bellmouth 56 towards the sea bed 6. The front skids 12 are adjusted as the body 8 pivots, and the depressor 44 is raised. A roller device 58 forming the lower surface of the bellmouth 56 and having front 60 and rear 62 rollers is pivoted downwards to enable the cable 4 to be inserted into the bellmouth 56, as shown in Figure 1C.

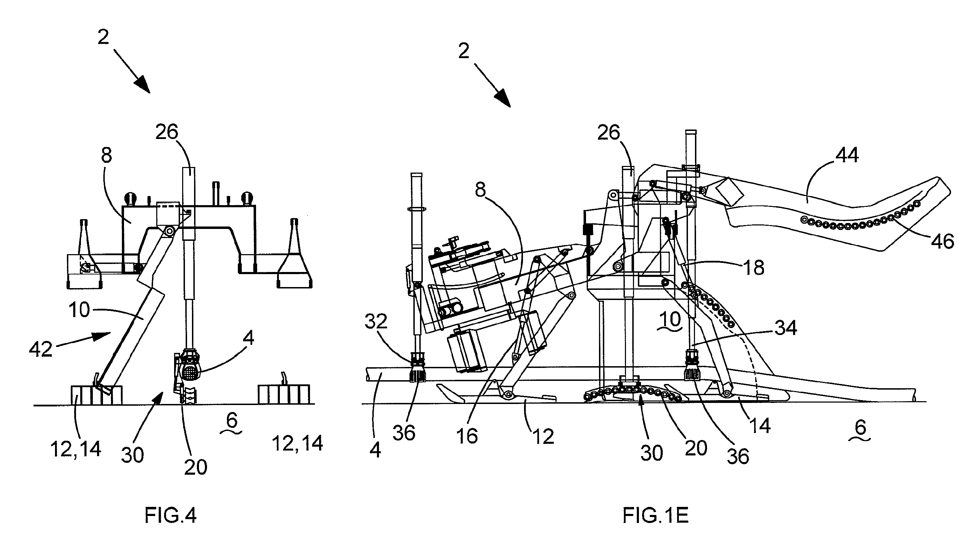

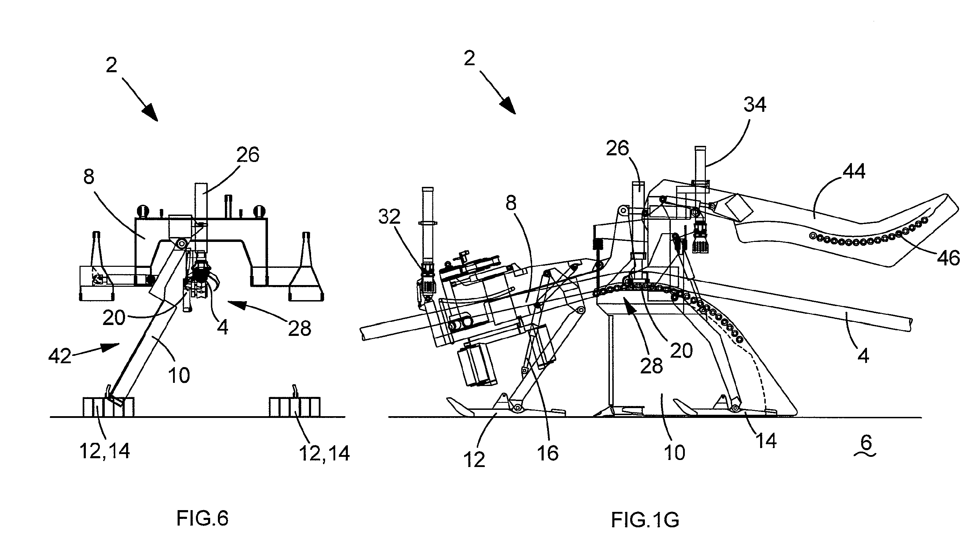

The jaws 36 of front 32 and rear 34 grabs are then opened and the grabs 32, 34 lowered to engage the cable 4. The cable support 20 is pivoted to one side and lowered by means of hydraulic actuator 26 to the third position 38 as shown in Figures 1D and 3. The grab devices 32, 34 then lift the cable 4 to the position shown in Figures 1E and 4, and the cable support 20 is pivoted until it is located under the cable 4. The grabs 32, 34 are then lowered until the cable 4 is supported on the cable support 20, and the grabs 32, 34 are then disengaged from the cable 4 and raised to a position clear of the cable path, as shown in Figures 1F and 5. The cable support 20 is then lifted by means of the hydraulic actuator 26 to the first position 28 as shown in Figures 1G and 6, and the risk of damage to the cable 4 is minimised as the weight of cable 4 lifted increases (as a result of the length of cable 4 out of contact with the sea bed 6 increasing), since the lifting forces are spread over a larger area on the upper surface of the rollers 24 on the cable support 20, and the arrangement of the rollers 24 in a curved path prevents bending of the cable 4 around a bend radius smaller than a first minimum bend radius. This also locates the cable 4 above the share 10 and in the bellmouth 56.

The share 10 is then pivoted to the fourth position 40, and the cable support 20 is lowered onto the top surface of the share 10. The bellmouth roller device 58 is also pivoted to its closed position to retain the cable 4 in the bellmouth 56, and the depressor 44 is lowered, as shown in Figures 1H and 7.

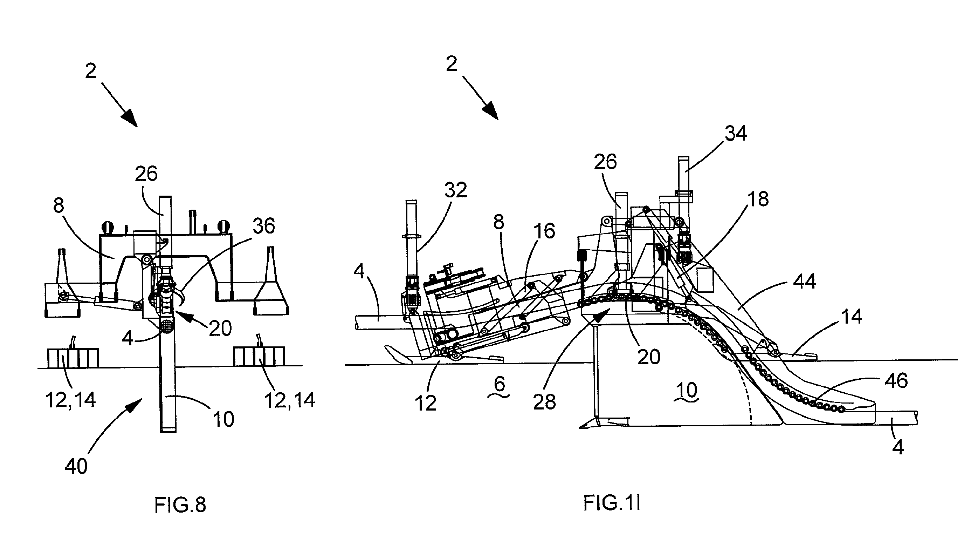

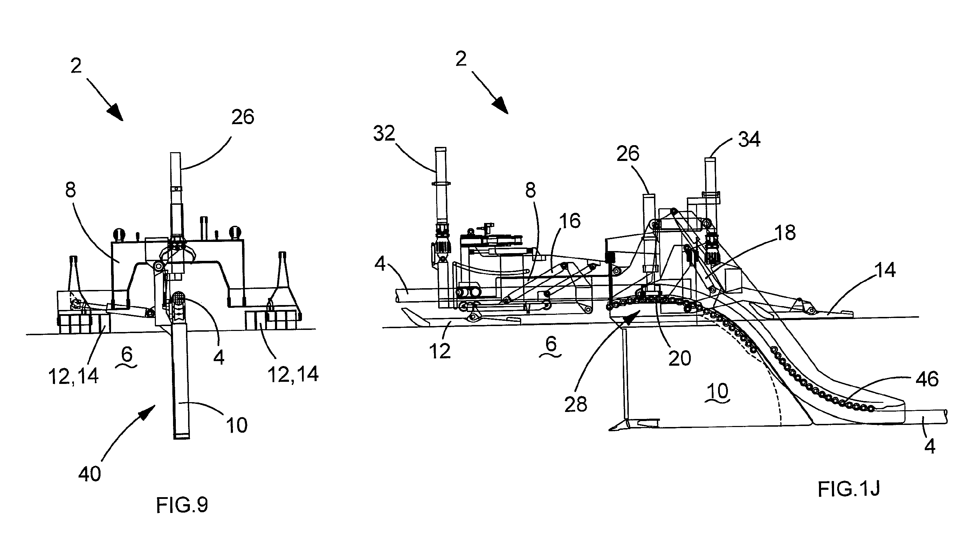

The plough 2 is then towed forwards by means of the surface vessel (not shown), and the height of the share 10 relative to the skids 12, 14 is reduced by means of actuators 16, 18, as a result of which the share 10 forms a trench in the sea bed 6, and the depressor 44 urges the cable 4 into the base of the trench, as shown in Figures 1I and 8, until the full depth of the plough share 10 is reached as shown in figures 1J and 9.

In order to unload the cable 4 from the plough 2, the steps of Figures 1A to 1J are then reversed.

It will be appreciated by persons skilled in the art that the above embodiment has been described by way of example only, and not in any limitative sense, and that various alterations and modifications are possible without departure from the scope of the invention as defined by the appended claims.

## Claims

1. A plough for placing an elongate object into a floor of a body of water, the plough comprising:-
trench forming means for forming a trench in the floor of the body of water for receiving the elongate object;
first support means for engaging the floor of the body of water and for supporting the trench forming means; and
second support means moveable between at least one first position, in which the second support means supports part of the elongate object above the trench forming means during formation of said trench, by allowing said part of said elongate object to rest on said second support means, and at least one second position, in which said part of said elongate object can be loaded onto the second support means, and at least one said second position is lower than the or each said first position.

2. A plough according to claim 1, wherein the second support means is adapted to prevent bending of the elongate object around a bend radius smaller than a first pre-determined minimum bend radius.

3. A plough according to claim 1 or 2, wherein the second support means comprises a plurality of rollers.

4. A plough according to any one of the preceding claims, further comprising lifting means for lifting said part of said elongate object out of contact with said floor, wherein said second support means is moveable between at least one third position, in which said second support means does not engage said part of said elongate object when said part is located in contact with said floor, and at least one said second position.

5. A plough according to claim 4, wherein the lifting means comprises a plurality of grab devices.

6. A plough according to claim 4 or 5, wherein the second support means is pivotable between at least one said third position and at least one said second position,.

7. A plough according to any one of the preceding claims, wherein the trench forming means is moveable between at least one fourth position, in which said trench forming means is adapted to form a trench in said floor, and at least one fifth position, in which said trench forming means does not obstruct movement of said second support means between at least one said first position and at least one said second position.

8. A plough according to claim 7, wherein the trench forming means is pivotable between at least one said fourth position and at least one said fifth position.

9. A plough according to any one of the preceding claims, wherein the first support means includes a plurality of ground engaging members.

10. A plough according to claim 9, wherein the first support means comprises a first plurality of ground engaging members arranged forwards of said trench forming means, and a second plurality of ground engaging members arranged rearwards of said trench forming means.

11. A plough according to claim 9 or 10, wherein a plurality of said ground engaging members comprises skids.

12. A plough according to any one of the preceding claims, further comprising actuator means for adjusting the height of said trench forming means relative to said floor.

13. A plough according to any one of the preceding claims, further comprising urging means for urging said elongate object into said trench.

14. A plough according to claim 13, wherein the urging means is adapted to prevent bending of said elongate object around a bend radius smaller than a second predetermined minimum bend radius.

15. A plough according to claim 13 or 14, wherein the urging means comprises a plurality of rollers.
